(19) Europäisches Patentamt
European Patent Office
Office européen des brevets

(11) Numéro de publication: **0 252 836 B1**

(12) **FASCICULE DE BREVET EUROPEEN**

(45) Date de publication du fascicule du brevet: **07.11.90**

(51) Int. Cl.⁵: **C01B 17/02**

(21) Numéro de dépôt: **87401583.7**

(22) Date de dépôt: **07.07.87**

(54) **Procédé pour l'élimination rapide de l'hydrogène sulfuré contenu dans le soufre liquide et système catalytique utilisable pour sa mise en oeuvre.**

(30) Priorité: **10.07.86 FR 8610062**

(43) Date de publication de la demande: **13.01.88 Bulletin 88/2**

(45) Mention de la délivrance du brevet: **07.11.90 Bulletin 90/45**

(84) Etats contractants désignés: **AT BE CH DE ES GB GR IT LI NL SE**

(56) Documents cités: **EP-A- 0 164 140** **US-A- 4 299 811**

(73) Titulaire: **SOCIETE NATIONALE ELF AQUITAINE (PRODUCTION), Tour Elf 2, Place de la Coupole La Défense 6, F-92400 Courbevoie(FR)**

(72) Inventeur: **Voirin, Robert, 7, rue du Passelys, F-64300 Orthez(FR)**
Inventeur: **Pepy, André, 7, rue du Clos Fleuri, F-64230 Lescar(FR)**

(74) Mandataire: **Boillot, Marc, SOCIETE NATIONALE ELF AQUITAINE Division Propriété Industrielle Tour Elf, F-92078 Paris la Défense Cédex 45(FR)**

**EP 0 252 836 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention a trait à un procédé pour l'élimination rapide de $H_2S$ présent dans le soufre liquide à l'état simplement dissous et à l'état combiné de polysulfures d'hydrogène, ledit procédé faisant appel à un système catalytique spécifique. Elle concerne encore une composition formée d'un mélange, d'une part, de soufre liquide renfermant de l'$H_2S$ à l'état simplement dissous et à l'état combiné de polysulfure d'hydrogène et, d'autre part, dudit système catalytique.

Des tonnages importants de soufre sont produits par le procédé CLAUS, qui consiste à faire réagir de l'hydrogène sulfuré, provenant par exemple de la désacidification de gaz naturels ou de traitements de produits pétroliers, sur de l'anhydride sulfureux, formé par exemple par combustion d'$H_2S$, ou encore par combustion de soufre ou de composés soufrés divers et notamment de pyrites, suivant le schéma réactionnel:

$$2H_2S + SO_2 \rightleftharpoons 3S + 2H_2O$$

Une fraction substantielle du soufre produit par le procédé CLAUS est recueillie et stockée à l'état liquide dans des fosses calorifugées, puis transportée sous forme liquide jusqu'aux points d'utilisation en faisant appel à des moyens de transport tels que camions-citernes, bateaux-citernes, wagons-citernes ou encore pipelines, qui sont pourvus de moyens appropriés de calorifugeage permettant au soufre de rester à l'état liquide au cours du transport.

Le soufre liquide obtenu par le procédé CLAUS renferme toujours à l'état dissous une petite quantité d'$H_2S$ et de polysulfures d'hydrogène, encore appelés sulfanes, de formule $H_2S_x$ dans laquelle x représente un nombre égal ou supérieur à 2, lesdits sulfanes se décomposant lentement dans le temps en libérant $H_2S$.

La phase gazeuse surmontant le soufre liquide se trouvant dans la fosse de stockage ou dans le conteneur utilisé pour son transport renferme donc une certaine proportion d'$H_2S$, ce qui, du fait de la toxicité de ce gaz et de sa tendance à l'inflammation spontanée, rend dangereuses les opérations liées au chargement et au déchargement des conteneurs servant au transport du soufre liquide. Pour que ces opérations puissent se faire dans des conditions satisfaisantes de sécurité pour le personnel opérateur, on soumet généralement le soufre liquide CLAUS, préalablement auxdites opérations, à un traitement, dit traitement de dégazage, dont le but est d'abaisser la teneur en $H_2S$ libre et combiné dudit soufre liquide en-dessous d'un seuil que la pratique fixe à 10 ppm.

La quantité globale d'$H_2S$ et de sulfanes dans le soufre liquide CLAUS est en général comprise entre 50 et 700 ppm et dépend essentiellement de la concentration en $H_2S$ de la phase gazeuse surmontant le soufre liquide et de la température de ce dernier. De plus les proportions relatives d'$H_2S$ libre et de sulfanes dissous dans le soufre liquide dépendent aussi de la température de celui-ci.

Le processus d'élimination de l'$H_2S$ présent dans le soufre liquide sous les formes libre et combinée comporte deux phases, à savoir une phase de décomposition des sulfanes les plus lourds en $H_2S$ et soufre suivant la réaction $H_2S_x \rightarrow H_2S + S_{x-1}$, et une phase d'extraction et/ou de transformation in situ en soufre de l'$H_2S$ libéré et simplement dissous et des sulfanes légers.

La décomposition des sulfanes en $H_2S$ et soufre est une réaction lente, ce qui implique que la vitesse d'élimination de l'$H_2S$ est limitée par la vitesse de cette réaction de décomposition.

La plupart des procédés proposés pour éliminer l'$H_2S$ libre et combiné contenu en solution dans le soufre liquide sont du type dans lequel on incorpore au soufre liquide un système catalytique formé d'un ou plusieurs composés consistant en ammoniac ou composés libérant de l'ammoniac ou encore en composés ayant un caractère basique au sens de BRONSTEDT, de manière à faciliter la décomposition des sulfanes, l'$H_2S$ libéré simplement dissous étant soit extrait du soufre liquide par toute technique permettant à l'$H_2S$ dissous physiquement de s'échapper du soufre liquide soit transformé in situ en soufre sous l'action d'un gaz oxydant. En particulier, dans le procédé de la citation EP-B-0045636, on décrit l'utilisation d'un système catalytique consistant en un composé choisi parmi les composés inorganiques du phosphore, l'urée, les dérivés de l'urée, les dithionates, les dithionites, les thiosulfates, les bisulfures et les bisulfites. Dans les procédés décrits dans les citations US-A-3 364 655,FR-A-2 159 691 et US-A-4 131 437, on emploie l'ammoniac comme système catalytique et on extrait l'$H_2S$ libéré par décomposition des sulfanes par pulvérisation du soufre liquide (US-A-3 364 655), par stripage par un gaz inerte (FR-A-2 159 691) ou par balayage de la surface libre du soufre liquide au moyen d'un gaz tel que vapeur d'eau, azote, air, gaz résiduaire d'usines à soufre (US-A- 4 131 437). L'utilisation d'un système catalytique du type ammoniac, sels d'ammonium, amines et autres composés azotés est encore proposée dans les citations FR-A-2 185 587 et US-A-3 447 903 avec transformation in situ en soufre de l'$H_2S$ libéré par décomposition des sulfanes par action d'un gaz oxydant, à savoir l'air dans le premier cas et $SO_2$ dans le second cas, injecté dans le soufre liquide.

Les procédé précités présentent l'inconvénient d'avoir une cinétique lente, ce qui empêche notamment une mise en oeuvre substantiellement continue à la sortie directe des unités de fabrication de soufre. En effet, dans de tels procédés il faut plusieurs heures, par exemple au moins 2,5 heures en utilisant un système catalytique formé de composés tels que définis dans EP-B-0045636 ou encore au moins 5 à 8

heures lorsque l'on fait appel à l'ammoniac comme système catalytique, pour obtenir un soufre liquide renfermant une teneur en $H_2S$ libre et combiné inférieure au seuil fixé par la pratique.

On a maintenant trouvé qu'en faisant appel à un système catalytique basique spécifique, d'efficacité améliorée, on pouvait abaisser la teneur en "$H_2S$ total", c'est-à-dire la teneur en $H_2S$ libre et combiné du soufre liquide, au-dessous du seuil de 10 ppm avec des durées de traitement nettement plus courtes que celles qui sont nécessaires dans les procédés précités pour arriver à ce résultat. De plus, ledit catalyseur spécifique peut être mis en oeuvre très facilement et il n'entraîne pas de coloration du soufre traité ni de formation de dépôts.

L'invention a donc pour objet un procédé d'élimination rapide de l'$H_2S$ présent dans le soufre liquide à l'état simplement dissous et à l'état combiné de polysulfures d'hydrogène, qui est du type dans lequel on incorpore au soufre liquide un système catalytique renfermant un ou plusieurs composés à caractère basique et l'on maintient le tout dans des conditions propres à évacuer l'hydrogène sulfuré hors du soufre liquide et se caractérise en ce que ledit système catalytique consiste en un ou plusieurs composés choisis parmi les composés hétérocycliques, monocycliques ou polycycliques, qui renferment un ou plusieurs hétéroatomes consistant en atomes d'azote et éventuellement un ou plusieurs autres hétéroatomes, notamment soufre et/ou oxygène, et qui sont solubles et stables dans le soufre liquide aux températures de traitement et présentent en outre un point d'ébullition supérieur à 200°C à la pression atmosphérique.

Avantageusement lesdits composés hétérocycliques monocycliques ou polycycliques, sont des composés hétérocycliques à caractère aromatique, c'est-à-dire comportant au moins un cycle de type benzénique, qui ne renferment pas de substituants sur les cycles.

Les composés hétérocycliques formant le système catalytique suivant l'invention, qui comportent plusieurs hétéroatomes comprenant au moins un atome d'azote ou consistant uniquement en atomes d'azote, sont de préférence choisis parmi les composés hétérocycliques polycycliques et notamment parmi les composés hétérocycliques aromatiques à noyaux condensés portant lesdits hétéroatomes et pour lesquels ces hétéroatomes sont distribués dans les cycles de telle sorte qu'il y ait au plus un hétéroatome par cycle. Pour de tels composés hétérocycliques, il est avantageux que deux hétéroatomes d'azote voisins, chacun étant sur un cycle différent, ne soient pas séparés par une chaîne carbonée de plus de trois atomes de carbone.

Des exemples de composés hétérocycliques utilisables suivant l'invention pour constituer le système catalytique incorporé au soufre liquide sont tels que quinoléine, isoquinoléine, benzoquinoléines, acridine, benzacridine, quinoxalines, quinazoline, phénazine, phénantridine, phénantrolines, naphtyridines, bipyridyles.

La quantité de système catalytique ajoutée au soufre liquide doit d'une part être suffisante pour obtenir une élimination rapide et satisfaisante de l'$H_2S$ et d'autre part ne pas être trop importante pour ne pas augmenter le taux de cendres du soufre liquide. Avantageusement, la quantité de système catalytique ajoutée au soufre liquide est comprise entre environ 5 et 120 ppm, comptée en poids du soufre.

Les températures pour la mise en oeuvre du procédé suivant l'invention peuvent varier assez largement au-dessus du point de fusion du soufre et par exemple être situées entre 125°C et 180°C. De préférence, on opère à des températures allant de 130°C à 165°C.

Le procédé suivant l'invention doit être mis en oeuvre dans des conditions qui assurent une distribution aussi homogène que possible du système catalytique dans la masse du soufre liquide et permettent également d'évacuer hors de ladite masse l'hydrogène sulfuré libéré par décomposition des sulfanes et présent à l'état dissous dans le soufre liquide. Pour ce faire, on peut soumettre le soufre liquide contenant le système catalytique à une agitation, en faisant appel à tout système mécanique approprié d'agitation, l'$H_2S$ libéré s'échappant naturellement hors de la masse du soufre liquide. On peut encore réaliser l'agitation du soufre liquide et l'entraînement de l'$H_2S$ libéré par stripage au moyen d'un gaz inerte, c'est-à-dire suivant l'invention sans action sur les constituants du milieu dans lequel il est introduit dans les conditions de température choisies pour la mise en oeuvre du procédé, ledit gaz de stripage pouvant être notamment tel qu'azote, $CO_2$, air, vapeur d'eau, gaz résiduaire d'usine à soufre ou mélanges de tels gaz. On peut également effecteur l'agitation du soufre liquide renfermant le système catalytique et l'évacuation de l'$H_2S$ libéré en soumettant le soufre liquide à une pulvérisation comme décrit par exemple dans la citation US-A-3 364 655. Si besoin est on peut encore opérer en utilisant une combinaison de ces différents modes d'agitation du soufre liquide et d'évacuation de l'$H_2S$ libéré.

Le traitement du soufre liquide incluant l'une ou l'autre ou une combinaison des opérations d'agitation précitées est généralement mis en oeuvre dans l'enceinte calorifugée, par exemple fosse ou réservoir métallique, dans laquelle ledit soufre liquide est stocké, et il est recommandé d'effectuer un balayage de l'espace surmontant la surface libre du soufre liquide au moyen d'un gaz inerte tel que $CO_2$, azote, air, gaz résiduaire d'usine à soufre CLAUS, pour évacuer l'$H_2S$, généralement vers une zone d'incinération, et faciliter ainsi l'entraînement de l'$H_2S$, libéré par décomposition des sulfanes, hors de la masse de soufre liquide. Lorsque ledit balayage est réalisé à l'aide d'un gaz résiduaire d'usine à soufre, c'est-à-dire d'un gaz renfermant encore une petite quantité d'$H_2S$, il faut contrôler ladite quantité, par exemple par dilution du gaz résiduaire avec un gaz inerte, de manière à ce qu'elle ne soit pas supérieure, au moins vers la fin de l'opération, à la teneur en $H_2S$ gazeux en équilibre, à la température de l'opération, avec la quantité d'$H_2S$ que l'on tolère dans le soufre liquide.

L'addition du système catalytique au soufre liquide peut être réalisée en une seule fois au début de l'opération ou par fractions tout au long de l'opération. Lorsque le traitement d'élimination de l'$H_2S$ comporte une agitation mécanique du soufre liquide contenu dans l'enceinte, fosse ou réservoir métallique, dans laquelle il est stocké, le système catalytique peut être ajouté dans l'alimentation en soufre liquide de l'enceinte servant au traitement. Si un stripage est envisagé pour évacuer l'$H_2S$ hors de la masse de soufre liquide, le système catalytique peut être amené dans le gaz de stripage et/ou ajouté dans l'alimentation en soufre liquide de l'enceinte de traitement. Dans le cas où l'on réalise une pulvérisation du soufre liquide, une telle pulvérisation comportant généralement l'amenée du soufre liquide à une buse de pulvérisation au moyen d'une pompe comportant un conduit d'aspiration plongeant dans le soufre liquide, le système catalytique peut être injecté à l'aspiration ou au refoulement de la pompe ou/et dans l'alimentation en soufre liquide de l'enceinte de traitement.

Le procédé suivant l'invention peut être mis en oeuvre en opérant en discontinu ou en continu.

Les figures 1 et 2 du dessin annexé représentent schématiquement deux dispositifs utilisables pour la mise en oeuvre du procédé suivant l'invention.

Une mise en oeuvre en discontinu du procédé suivant l'invention avec pulvérisation du soufre liquide renfermant le système catalytique peut être effectuée par exemple, comme le montre la figure 1 en opérant dans une enceinte 1 fermée calorifugée, notamment une fosse ou un réservoir métallique, divisée en deux compartiments, à savoir un premier compartiment 2 de faible volume et un deuxième compartiment 3 de volume important, par une cloison 4 ouverte à la partie supérieure de manière à former un trop plein permettant au soufre liquide de s'écouler du premier dans le deuxième compartiment. Le fond 5 du premier compartiment est surélevé par rapport à celui 6 du deuxième compartiment. L'enceinte est munie d'une amenée 7 de gaz de balayage débouchant dans le premier compartiment au-dessus du niveau du trop-plein et d'une sortie 8 de gaz de balayage prévue dans la partie supérieure du deuxième compartiment. En outre, le premier compartiment est d'une part muni d'un conduit 9 d'amenée du soufre liquide, ledit conduit portant une dérivation 10 pour l'addition du système catalytique, et d'autre part équipé de moyens mécaniques 11 d'agitation et le deuxième compartiment est équipé d'un système 12 de pulvérisation comportant une pompe 13 dont le conduit d'aspiration 14 est disposé pour plonger dans le soufre liquide et le refoulement 15 est connecté à une buse 16 de pulvérisation disposée dans ledit deuxième compartiment de manière à être située au-dessus de la surface libre 17 du soufre liquide contenu dans ce compartiment.

Dans une telle mise en oeuvre, le soufre liquide renfermant le système catalytique est soumis à une forte agitation dans le premier compartiment 2, ce qui conduit à réaliser une distribution homogène dudit système catalytique dans le soufre liquide contenu dans ledit compartiment et à initier la réaction de décomposition des sulfanes, puis le mélange de soufre liquide et de système catalytique s'écoule par le trop-plein 4 dans le deuxième compartiment 3, dans lequel ledit mélange est soumis à une pulvérisation. L'$H_2S$ s'échappant hors de la masse de soufre liquide contenue dans les deux compartiments est évacué par circulation du gaz de balayage, par exemple un gaz résiduaire d'usine à soufre CLAUS, et dirigé avec ce gaz vers une zone d'incinération.

Une mise en oeuvre en continu du procédé suivant l'invention avec pulvérisation du soufre liquide renfermant le système catalytique, peut être effectuée par exemple, comme le montre la figure 2 en opérant dans une enceinte 20 fermée calorifugée, par exemple un réservoir métallique calorifugé, divisée en au moins trois compartiments successifs, à savoir un compartiment d'entrée 21, un ou plusieurs compartiments intermédiaires 31 et un compartiment de sortie 41, par des partitions verticales parallèles 22 et 32 qui sont ouvertes à la partie inférieure pour mettre en communication chacun des compartiments avec les compartiments qui lui sont adjacents et dont la hauteur est inférieure à celle de l'enceinte de manière à pouvoir, le cas échéant, jouer un rôle de trop-plein pour le soufre liquide. Le compartiment d'entrée 21 est d'une part pourvu d'un conduit 23 d'amenée du soufre liquide portant en dérivation un conduit 24 pour l'addition du système catalytique et, à sa partie supérieure, d'une sortie 25 pour un gaz de balayage et d'autre part il est équipé d'un système mécanique d'agitation 26. En outre, chacun des compartiments 31 intermédiaire(s) et de sortie 41 est équipé d'un système de pulvérisation 33 et 43, ledit système comportant une pompe 34 et 44 munie d'une part d'un conduit d'aspiration 35 et 45 disposé pour plonger dans le soufre liquide dans la partie aval du compartiment concerné et d'autre part d'un conduit de refoulement 36 et 46 connecté à une buse de pulvérisation 37 et 47 placée dans ledit compartiment de manière à être disposée dans la partie amont de ce compartiment au-dessus de la surface libre 30 du soufre liquide qu'il renferme. De plus le compartiment 41 de sortie est muni d'une amenée 48 pour un gaz de balayage arrangée au-dessus de la surface libre 30 du soufre liquide et la pompe du système de pulvérisation équipant ledit compartiment de sortie comporte en dérivation un conduit 49 servant à prélever le soufre liquide traité.

Dans une telle mise en oeuvre, le soufre liquide additionné du système catalytique arrive en continu dans le compartiment 21 d'entrée et s'y trouve soumis à une forte agitation, ce qui conduit à réaliser une distribution homogène du système catalytique dans le soufre liquide contenu dans ledit compartiment et à initier ainsi la réaction de décomposition des sulfanes, puis le mélange de soufre liquide et de système catalytique s'écoule en continu successivement dans le ou les compartiments intermédiaires 31 puis dans le compartiment 41 de sortie dans chacun desquels ledit mélange est soumis à une pulvérisation. L'$H_2S$ s'échappant hors de la masse de soufre liquide contenue dans les divers compartiments est évacué en

continu de l'enceinte en mélange avec le gaz de balayage, par exemple un gaz résiduaire d'usine à soufre CLAUS, qui est injecté dans le compartiment 41 de sortie, et circule au-dessus de la surface libre 30 du soufre liquide à contre-courant de ce dernier puis sort de l'enceinte par la sortie 25 prévue à cet effet dans le compartiment d'entrée 21, le gaz de balayage chargé d'$H_2S$ étant ensuite dirigé vers une zone d'incinération. Le soufre liquide traité est soutiré en continu par le conduit 49 monté sur la pompe 44 du système de pulvérisation 43, qui équipe le compartiment 41 de sortie de l'enceinte 20.

A titre de variante, l'opération de pulvérisation du mélange de soufre liquide et de système catalytique prévue dans la mise en oeuvre en discontinu ou l'une au moins des opérations de pulvérisation prévues dans la mise en oeuvre en continu peut être remplacée par une opération de stripage de l'$H_2S$ à l'aide d'un gaz inerte injecté dans le soufre liquide contenu dans le ou les compartiments concernés de l'enceinte de traitement.

En outre, dans le dispositif de la figure 1, le compartiment 2 peut être supprimé, le soufre liquide et le système catalytique étant introduits directement dans le compartiment 3 formant alors l'unique compartiment de l'enceinte.

Comme indiqué plus haut, l'invention concerne encore une composition formée d'un mélange, d'une part, de soufre liquide renfermant $H_2S$ à l'état simplement dissous ou/et, à l'état combiné de polysulfures d'hydrogène et, d'autre part, du système catalytique utilisé dans le procédé selon l'invention.

L'invention est illustrée par les exemples suivants donnés à titre non limitatif.

EXEMPLES 1 A 11:

Dans ces exemples, on effectuait l'élimination de l'$H_2S$ contenu dans du soufre liquide provenant d'une unité à soufre CLAUS, en opérant soit en présence d'ammoniac comme système catalytique (exemple 1 témoin) soit en présence d'un système catalytique suivant l'invention.

On opérait dans un ballon de verre maintenu à température constante dans un bain d'huile thermostaté. Le ballon était muni d'une première tubulure, dans laquelle passait un tube plongeur en verre pour l'introduction d'un gaz de stripage, d'une deuxième tubulure par laquelle passait un tube de verre pour l'amenée d'un gaz de balayage, l'extrémité dudit tube étant située deux centimètres environ au-dessus de la surface libre du soufre liquide, et d'une troisième tubulure permettant l'injection du catalyseur et également le prélèvement d'échantillons de soufre liquide, ledit ballon présentant en outre une sortie pour les gaz prolongée par un conduit d'évacuation traversant un système de piégeage de l'$H_2S$.

Dans le ballon, on plaçait 1000 g de soufre liquide prélevé à la sortie d'un condenseur d'unité à soufre et maintenait ce soufre à la température appropriée. A partir d'un instant pris comme origine des temps, on introduisait dans le ballon d'une part, par le tube plongeur, 100 l/h d'un gaz de stripage à savoir azote (exemples 1, 7 et 5) ou air (autres exemples) et d'autre part, par le tube de balayage, 120 l/h d'air comme gaz de balayage et l'on évacuait, par le conduit approprié, 220 l/h d'un effluent gazeux que l'on dirigeait vers le système de piégeage de l'$H_2S$. A intervalles déterminés, on prélevait des échantillons de soufre liquide et dosait l'$H_2S$ et les sulfanes qu'ils renfermaient encore par iodométrie ou argentimétrie. Le point d'équivalence de la réaction de dosage était détecté par potentiométrie à intensité imposée en utilisant des électrodes bimétalliques.

Le résultat du dosage, désigné par "$H_2S$ total", représentait la somme des teneurs du soufre liquide respectivement en $H_2S$ libre simplement dissous et en $H_2S$ combiné sous la forme de sulfanes.

Dans l'exemple 1 témoin, on effectuait deux injections de 25 ppm d'ammoniac dans le soufre liquide, par addition au gaz de stripage, la première à l'instant origine et la seconde au bout d'une heure. Dans les autres exemples, le système catalytique était ajouté au contenu du ballon, à l'instant choisi comme origine des temps, sous la forme d'une solution dans une petite quantité de soufre liquide, cette addition étant réalisée par la tubulure servant au prélèvement des échantillons de soufre liquide.

Les conditions opératoires spécifiques aux divers exemples et les résultats obtenus sont rassemblés dans le Tableau I.

TABLEAU I

| EXEMPLE | SYSTEME CATALYTIQUE (Nature et quantité) | TRAITEMENT Température (°C) | Durée (mn) | TENEUR EN "$H_2S$ TOTAL" DU SOUFRE LIQUIDE (ppm) |
|---|---|---|---|---|
| | | | 0 | 465 |
| 1 | $NH_3$ | | 60 | 284 |
| (Témoin) | | 140 | 120 | 132 |
| | 2 X 25 ppm | | 240 | 18 |
| | | | 300 | 9,5 |
| | | | 0 | 511 |
| 2 | Quinoléine | | 12 | 80 |
| | | 135 | 24 | 27 |
| | 92 ppm | | 38 | 6 |
| | | | 48 | < 2 |
| | | | 0 | 534 |
| 3 | Quinoléine | | 12 | 150 |
| | | 150 | 22 | 77 |
| | 98 ppm | | 40 | 24 |
| | | | 50 | 10 |
| | | | 80 | <2 |
| | | | 0 | 430 |
| 4 | Quinoléine | | 12 | 189 |
| | | 165 | 35 | 90 |
| | 100 ppm | | 62 | 71 |
| | | | 135 | 32 |
| | | | 200 | 10 |
| | | | 0 | 489 |
| 5 | Quinoléine | | 10 | 156 |
| | | 150 | 30 | 30 |
| | 90 ppm | | 52 | 10 |
| | | | 80 | <2 |

TABLEAU I (Suite)

| EXEMPLE | SYSTEME CATALYTIQUE (Nature et quantité) | TRAITEMENT Température (°C) | Durée (mn) | TENEUR "$H_2S$ TOTAl SOUFRE LI (ppm) |
|---|---|---|---|---|
| 6 | Isoquinoléine 89 ppm | 150 | 0 | 509 |
| | | | 15 | 51 |
| | | | 28 | 21 |
| | | | 45 | 5 |
| | | | 50 | <2 |
| 7 | Phénantridine 41 ppm | 150 | 0 | 340 |
| | | | 10 | 132 |
| | | | 26 | 44 |
| | | | 40 | 32 |
| | | | 74 | 10 |
| | | | 108 | <2 |
| 8 | o. Phénantroline 8 ppm | 150 | 0 | 543 |
| | | | 7 | 109 |
| | | | 20 | 17 |
| | | | 35 | <2 |
| 9 | o. Phénantroline 56 ppm | 150 | 0 | 298 |
| | | | 8 | 16 |
| | | | 15 | <2 |
| 10 | Bipyridyl-2,2' 85 ppm | 150 | 0 | 432 |
| | | | 15 | 29 |
| | | | 70 | 37 |
| | | | 108 | 1 |
| | | | 150 | < |
| 11 | 1,8-Naphtyridine 80 ppm | 150 | 0 | 58 |
| | | | 6 | 22 |
| | | | 20 | 4 |
| | | | 40 | 7 |

La comparaison des résultats des exemples 2 à 11 à ceux de l'exemple 1 témoin met en évidence l'efficacité des sytèmes catalytiques suivant l'invention, qui permettent d'atteindre des teneurs en "$H_2S$ total" dans le soufre liquide inférieures à 10 ppm au bout d'une durée de traitement substantiellement plus courte que celle nécessaire en utilisant un catalyseur basique conventionnel tel que l'ammoniac.

**Revendications**

1 - Procédé pour l'élimination rapide de l'$H_2S$ présent dans le soufre liquide à l'état simplement dissous et à l'état combiné de polysulfures d'hydrogène, du type dans lequel on incorpore au soufre liquide un système catalytique renfermant un ou plusieurs composés à caractère basique et l'on maintient le tout dans des conditions propres à évacuer l'hydrogène sulfuré hors du soufre liquide et se caractérisant en ce que ledit système catalytique consiste en un ou plusieurs composés choisis parmi les composés hétérocycliques monocycliques ou polycycliques, qui renferment un ou plusieurs hétéroatomes consistant en atomes d'azote et éventuellement un ou plusieurs autres hétéroatomes, notamment soufre et/ou oxygène, et qui sont solubles et stables dans le soufre liquide aux températures de traitement et présentent en outre un point d'ébullition supérieur à 200°C à la pression atmosphérique.

2 - Procédé suivant la revendication 1, caractérisé en ce que lesdits composés hétérocycliques, monocycliques ou polycycliques, sont des composés hétérocycliques à caractère aromatique, qui ne renferment pas de substituant sur les cycles.

3 - Procédé suivant la revendication 1 ou 2 caractérisé en ce que les composés hétérocycliques formant le système catalytique comportent plusieurs hétéroatomes comprenant au moins un atome d'azote ou consistant uniquement en atomes d'azote et sont choisis parmi les composés hétérocycliques polycycliques, et notamment parmi les composés hétérocycliques aromatiques à noyaux condensés, portant lesdits hétéroatomes et pour lesquels ces hétéroatomes sont distribués dans les cycles de telle sorte qu'il y ait au plus un hétéroatome par cycle.

4 - Procédé suivant la revendication 3, caractérisé en ce que deux hétéroatomes d'azote voisins, chacun étant sur un cycle différent, sont séparés par une chaîne carbonée ayant au plus trois atomes de carbone.

5. Procédé suivant l'une des revendications 1 à 4, caractérisé en ce que le système catalytique consiste en un ou plusieurs composés choisis dans le groupe formé par la quinoléine, l'isoquinoléine, les benzoquinoléines, l'acridine, la benzacridine, la quinoxaline, la quinazoline, la phénazine, la phénantridine, les phénantrolines, les naphtyridines et les bipyridyles.

6. Procédé suivant l'une des revendications 1 à 5, caractérisé en ce que la quantité de système catalytique incorporée au soufre liquide est comprise entre environ 5 et 120 ppm en poids du soufre.

7. Procédé suivant l'une des revendications 1 à 6, caractérisé en ce que la mise en contact du soufre avec le système catalytique est réalisée à une température comprise entre 130°C et 165°C.

8. Procédé suivant l'une des revendications 1 à 7, caractérisé en ce que le soufre liquide renfermant le système catalytique est soumis à une agitation, ladite agitation étant en particulier réalisée par des moyens mécaniques d'agitation, par pulvérisation du soufre liquide, ou encore par injection d'un gaz inerte, jouant le rôle d'un gaz de stripage, dans la masse de soufre liquide, ou bien par une combinaison de ces techniques.

9. Procédé suivant la revendication 8, caractérisé en ce que l'on balaie en outre la surface libre du soufre liquide renfermant le système catalytique à l'aide d'un gaz, qui est inerte dans les conditions de l'opération.

10. Composition formée d'un mélange, d'une part, de soufre liquide renfermant de l'$H_2S$ à l'état simplement dissous ou à l'état combiné de polysulfures d'hydrogène et d'autre part, d'un système catalytique consistant en un ou plusieurs composés choisis parmi les composés hétérocycliques monocycliques ou polycycliques, qui renferment un ou plusieurs hétéroatomes consistant en atomes d'azote et éventuellement un ou plusieurs autres hétéroatomes, notamment soufre et/ou oxygène, et qui sont solubles et stables dans le soufre liquide aux températures comprises entre 125°C et 180°C et présentent en outre un point d'ébullition supérieur à 200°C à la pression atmosphérique.

11. Composition suivant la revendication 10, caractérisée en ce que lesdits composés hétérocycliques, monocycliqes ou polycycliques, sont des composés hétérocycliques à caractère aromatique, qui ne renferment pas de substituant sur les cycles.

12. Composition suivant la revendication 10 ou 11, caractérisée en ce que les composés hétérocycliques formant le système catalytique comportent plusieurs hétéroatomes comprenant au moins un atome d'azote ou consistant uniquement en atomes d'azote et sont choisis parmi les composés hétérocycliques polycycliques, et notamment parmi les composés hétérocycliques aromatiques à noyaux condensés, portant lesdits hétéroatomes et pour lesquels ces hétéroatomes sont distribués dans les cycles de telle sorte qu'il y ait au plus un hétéroatome par cycle.

13. Composition suivant la revendication 12, caractérisée en ce que deux hétéroatomes voisins, chacun étant sur un cycle différent, sont séparés par une chaîne carbonée ayant au plus trois atomes de carbone.

14. Composition suivant la revendication 10, caractérisée en ce que le système catalytique consiste en un ou plusieurs composés choisis dans le groupe formé par la quinoléine, l'isoquinoléine, les benzoquinoléines, l'acridine, la benzacridine, la quinoxaline, la quinazoline, la phénazine, la phénantridine, les phénantrolines, les naphtyridines et les bipyridyles.

15. Composition suivant l'une des revendications 10 à 14, caractérisée en ce qu'elle renferme une quantité de système catalytique comprise entre 5 et 120 ppm en poids du soufre.

## Patentansprüche

1. Verfahren zur raschen Entfernung von Schwefelwasserstoff, der in flüssigem Schwefel einfach in gelöster Form oder in Form von Polyschwefelwasserstoffen vorliegt, wobei man dem flüssigen Schwefel ein katalytisches System zuführt, das eine oder mehrere basische Verbindungen umfaßt, und das Ganze unter geeigneten Bedingungen hält, um den Schwefelwasserstoff vom flüssigen Schwefel abzutrennen, dadurch gekennzeichnet, daß das katalytische System aus einer oder mehreren Verbindungen besteht, ausgewählt unter heterocyclischen monocyclischen oder polycyclischen Verbindungen, die ein oder mehrere Heteroatome, und zwar Stickstoffatome und gegebenenfalls ein oder mehrere andere Heteroatome, insbesondere Schwefel und/oder Sauerstoff umfassen und im flüssigen Schwefel bei den Behandlungstemperaturen löslich und beständig sind und außerdem einen Kochpunkt von über 200°C bei Atmosphärendruck aufweisen.

2. Verfahren nach Anspruch 1, dadurch gekennzeichnet, daß die heterocyclischen monocyclischen oder polycyclischen Verbindungen heterocyclische aromatische Verbindungen sind, die an den Ringen keine Substituenten aufweisen.

3. Verfahren nach Anspruch 1 oder 2, dadurch gekennzeichnet, daß die das katalytische System bildenden heterocyclischen Verbindungen mehrere Heteroatome enthalten und dabei wenigstens ein Stickstoffatom umfassen oder ausschließlich aus Stickstoffatomen bestehen und ausgewählt sind unter heterocyclischen polycyclischen Verbindungen und insbesondere unter heterocyclischen aromatischen Verbindungen mit kondensierten Kernen, welche die genannten Heteroatome tragen, wobei diese in den Ringen so verteilt sind, daß höchstens ein Heteroatom auf einen Ring kommt.

4. Verfahren nach Anspruch 3, dadurch gekennzeichnet, daß zwei benachbarte Stickstoffheteroatome, die sich jeweils an einem anderen Ring befinden, durch eine Kohlenstoffkette mit höchstens drei C-Atomen getrennt sind.

5. Verfahren nach einem der Ansprüche 1 bis 4, dadurch gekennzeichnet, daß das katalytische System aus einer oder mehreren Verbindungen besteht, ausgewählt aus der Gruppe Chinolin, Isochinolin, Benzochinoline, Acridin, Benzacridin, Chinoxalin, Chinazolin, Phenazin, Phenantridin, Phenantroline, Naphthyridine und Bipyridyle.

6. Verfahren nach einem der Ansprüche 1 bis 5, dadurch gekennzeichnet, daß die Menge des dem flüssigen Schwefel zugeführten katalytischen Systems ca. 5 bis 120 ppm des Gewichts des Schwefels ausmacht.

7. Verfahren nach einem der Ansprüche 1 bis 6, dadurch gekennzeichnet, daß die Kontaktierung des Schwefels mit dem katalytischen System bei einer Temperatur zwischen 130 und 165°C durchgeführt wird.

8. Verfahren nach einem der Ansprüche 1 bis 7, dadurch gekennzeichnet, daß der das katalytische System enthaltende flüssige Schwefel gerührt wird, und zwar insbesondere mit Hilfe von mechanischen Rührvorrichtungen, durch Zerstäubung des flüssigen Schwefels oder außerdem durch Einspritzen eines Inertgases, das die Rolle eines Strippergases spielt, in den flüssigen Schwefel oder durch eine Kombination dieser Techniken.

9. Verfahren nach Anspruch 8, dadurch gekennzeichnet, daß man außerdem die freie Oberfläche des flüssigen Schwefels, der das katalytische System enthält, mit Hilfe eines unter den Betriebsbedingungen inerten Gases spült.

10. Zusammensetzung, gebildet aus einem Gemisch einerseits aus flüssigem Schwefel, der Schwefelwasserstoff in gelöster Form oder in Form von Polyschwefelwasserstoffen enthält, und andererseits aus einem katalytischen System, das aus einer oder mehreren Verbindungen besteht, ausgewählt unter heterocyclischen monocyclischen oder polycyclischen Verbindungen, die ein oder mehrere Heteroatome, und zwar Stickstoffatome und gegebenenfalls ein oder mehrere andere Heteroatome, insbesondere Schwefel und/oder Sauerstoff umfassen und im flüssigen Schwefel bei Temperaturen zwischen 125 und 180°C löslich und beständig sind und außerdem einen Kochpunkt von über 200°C bei Atmosphärendruck aufweisen.

11. Zusammensetzung nach Anspruch 10, dadurch gekennzeichnet, daß die heterocyclischen monocyclischen oder polycyclischen Verbindungen heterocyclische aromatische Verbindungen sind, die an den Ringen keine Substituenten aufweisen.

12. Zusammensetzung nach Anspruch 10 oder 11, dadurch gekennzeichnet, daß die das katalytische System bildenden heterocyclischen Verbindungen mehrere Heteroatome enthalten und dabei wenigstens ein Stickstoffatom umfassen oder ausschließlich aus Stickstoffatomen bestehen und ausgewählt sind unter heterocylischen polycyclischen Verbindungen und insbesondere unter heterocyclischen aromatischen Verbindungen mit kondensierten Kernen, welche die genannten Heteroatome tragen, wobei diese in den Ringen so verteilt sind, daß höchstens ein Heteroatom auf einen Ring kommt.

13. Zusammensetzung nach Anspruch 12, dadurch gekennzeichnet, daß zwei benachbarte Stickstoffheteroatome, die sich jeweils an einem anderen Ring befinden, durch eine Kohlenstoffkette mit höchstens drei C-Atomen getrennt sind.

14. Zusammensetzung nach Anspruch 10, dadurch gekennzeichnet, daß das katalytische System aus einer oder mehreren Verbindungen besteht, ausgewählt aus der Gruppe Chinolin, Isochinolin, Benzochinoline, Acridin, Benzacridin, Chinoxalin, Chinazolin, Phenazin, Phenantridin, Phenantroline, Naphthyridine und Bipyridyle.

15. Zusammensetzung nach einem der Ansprüche 10 bis 14, dadurch gekennzeichnet, daß sie eine Menge an katalytischem System von ca. 5 bis 120 ppm des Gewichts des Schwefels enthält.

## Claims

1. Process for the rapid elimination of $H_2S$ present in liquid sulphur in the simple dissolved state and in the combined state as hydrogen polysulphides, of the type in which a catalytic system containing one or more basic compounds is incorporated in the liquid sulphur and the mixture is maintained at conditions suitable for evacuating the hydrogen sulphide from the liquid sulphur, and characterised in that the said catalytic system consists of one or more compounds selected from monocyclic or polycyclic heterocyclic compounds, which contain one or more heteroatoms consisting of nitrogen atoms and if necessary one or more other heteroatoms, in particular sulphur and/or oxygen, and which are soluble and stable in liquid sulphur at the processing temperatures, and further having a boiling point greater than 200°C at atmospheric pressure.

2. Process according to Claim 1, characterised in that the said monocyclic or polycyclic heterocyclic compounds are aromatic heterocyclic compounds which do not have any substituents on the rings.

3. Process according to Claim 1 or 2, characterised in that the heterocyclic compounds forming the catalytic system comprise a plurality of heteroatoms comprising at least one nitrogen atom or consisting solely of nitrogen atoms and are selected from polycyclic heterocyclic compounds and in particular from aromatic heterocyclic compounds having a fused ring, containing the said heteroatoms and where these heteroatoms are distributed in the rings in such a way that there is at most one heteroatom per ring.

4. Process according to Claim 3, characterised in that two adjacent nitrogen heteroatoms, each being on a different ring, are separated by a carbon chain having a maximum of three carbon atoms.

5. Process according to any one of Claims 1 to 4, characterised in that the catalytic system consists of one or more compounds selected from the group formed by quinoline, isoquinoline, benzoquinolines, acridine, benzacridine, quinoxaline, quinazoline, phenazine, phenantridine, phenantrolines, naphthyridines, and bipyridyls.

6. Process according to any one of Claims 1 to 5, characterised in that the amount of catalytic system incorporated into the liquid sulphur is between approximately 5 and 120 ppm by weight of sulphur.

7. Process according to any one of Claims 1 to 6, characterised in that the sulphur is brought into contact with the catalytic system at a temperature between 130°C and 165°C,

8. Process according to any one of Claims 1 to 7, characterised in that the liquid sulphur containing the catalytic system is subjected to agitation, the said agitation being in particular performed by mechanical agitation means, by spraying the liquid sulphur, or by injecting an inert gas, acting as a stripping gas, into the liquid sulphur mass, or by a combination of these techniques.

9. Process according to Claim 8, characterised in that the free surface of the liquid sulphur containing the catalytic system is further swept by a gas which is inert in the operating conditions.

10. Composition formed of a mixture of liquid sulphur containing $H_2S$ in the simple dissolved state or in the combined state as hydrogen polysulphides and of a catalytic system consisting of one or more compounds selected from monocyclic or polycyclic heterocyclic compounds which contain one or more heteroatoms consisting of nitrogen atoms and if necessary one or more other heteroatoms, in particular sulphur and/or oxygen, and which are soluble and stable in liquid sulphur at temperatures between 125°C and 180°C and furthermore have a boiling point greater than 200°C at atmospheric pressure.

11. Composition according to Claim 10, characterised in that the said monocyclic or polycyclic heterocyclic compounds are aromatic heterocyclic compounds which do not contain any substituents on the rings.

12. Composition according to Claim 10 or 11, characterised in that the heterocyclic compounds forming the catalytic system comprise a plurality of heteroatoms comprising at least one nitrogen atom or consisting solely of nitrogen atoms, and are selected from polycyclic heterocyclic compounds and in particular from aromatic heterocyclic compounds with fused rings containing the said heteroatoms and where these heteroatoms are distributed in the rings in such a way that there is at most one heteroatom per ring.

13. Composition according to Claim 12, characterised in that two adjacent heteroatoms, each being on a different ring, are separated by a carbon chain having a maximum of three carbon atoms.

14. Composition according to Claim 10, characterised in that the catalytic system consists of one or more compounds selected from the group consisting of quinoline, isoquinoline, benzoquinolines, acridine, benzacridine, quinoxaline, quinazoline, phenazine, phenantridine, phenantrolines, naphthyridines and bipyridyls.

15. Composition according to any one of Claims 10 to 14, characterised in that it contains a quantity of the catalytic system comprised between 5 and 120 ppm by weight of sulphur.